(19) **Europäisches Patentamt / European Patent Office / Office européen des brevets**

(11) **EP 4 786 631 A1**

(12) # EUROPEAN PATENT APPLICATION
published in accordance with Art. 153(4) EPC

(43) Date of publication:
**05.08.2026  Bulletin 2026/32**

(21) Application number: **24870698.8**

(22) Date of filing: **24.09.2024**

(51) International Patent Classification (IPC):
*C22C 38/14* (2006.01)      *C22C 38/12* (2006.01)
*C22C 38/06* (2006.01)      *C22C 38/04* (2006.01)
*C22C 38/02* (2006.01)      *C22C 38/00* (2006.01)
*C21D 9/46* (2006.01)       *C21D 8/02* (2026.01)
*C21C 5/52* (2006.01)       *C21C 7/10* (2006.01)
*C21C 7/06* (2006.01)

(52) Cooperative Patent Classification (CPC):
**B22D 11/16; B22D 11/20; C21C 5/52; C21C 7/00;
C21C 7/06; C21C 7/10; C21D 8/02; C21D 9/46;
C22C 33/04; C22C 38/00; C22C 38/02;
C22C 38/04; C22C 38/06; C22C 38/12;
C22C 38/14;**                          (Cont.)

(86) International application number:
**PCT/CN2024/120666**

(87) International publication number:
**WO 2025/067154 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.09.2023  CN 202311240212**

(71) Applicant: **BAOSHAN IRON & STEEL CO., LTD.
Shanghai 201900 (CN)**

(72) Inventors:
• **CHEN, Mengxiao**
  **Shanghai 201900 (CN)**
• **ZHONG, Yong**
  **Shanghai 201900 (CN)**
• **LI, Wei**
  **Shanghai 201900 (CN)**
• **WANG, Li**
  **Shanghai 201900 (CN)**

(74) Representative: **Kuhnen & Wacker
Patent- und Rechtsanwaltsbüro PartG mbB
Prinz-Ludwig-Straße 40 A
85354 Freising (DE)**

(54) ## LOW-CARBON-FOOTPRINT ULTRAHIGH-STRENGTH STEEL AND MANUFACTURING METHOD THEREOF

(57)   Disclosed in the present invention is a low-carbon-footprint ultrahigh-strength steel, comprising Fe and inevitable impurities, and further comprises the following chemical elements in percentage by mass: C: 0.06-0.12%, Si: 0.2-0.6%, Mn: 1.7-2.3%, Mo: 0.14-0.22%, Nb: 0.02-0.05%, Ti: 0.03-0.07%, Al: 0.02-0.06%, B: 0.001-0.003%, and N: 0.005-0.01%; and the distribution coefficient of N in the ultrahigh-strength steel is: $N_{solid\ solution}/N_{precipitation} \geq 4$. The present invention further provides a manufacturing method for the ultrahigh-strength steel. The ultrahigh-strength steel of the present invention has the technical advantages of green and low-carbon characteristics as well as high strength and decreased weight.

(52) Cooperative Patent Classification (CPC): (Cont.)
Y02P 10/20

**Description**

**Technical Field**

The present invention relates to a steel plate and a manufacturing method therefor, and particularly relates to an ultra-high strength steel plate and a manufacturing method therefor.

**Background Art**

In recent years, for the purpose of achieving vehicle body weight reduction, energy conservation and emission reduction, improvement of collision safety and reduction of manufacturing costs, advanced high-strength steel for automobiles has been widely adopted, which reduces the thickness of steel plates by increasing the strength of steel plates while maintaining excellent formability.

With the development of high-strength steel technology, it is expected to focus not only on the improvement of its mechanical properties, but also on its integration of high strength and weight reduction with green and low carbon properties.

The Chinese patent document with Publication No. CN113215477A, published on August 6, 2021 and entitled "A Preparation Method for Low-Carbon-Emission Cold-Rolled Base Steel Strip", discloses a preparation method for low-carbon-emission cold-rolled base steel strip. Its process route is a method for producing a low-carbon, low-silicon, boron-containing cold-rolled deep-drawing base steel strip coil by means of top and bottom combined blowing converter smelting, converter tapping and slag washing for inclusion removal, slab continuous casting and hot continuous rolling. Although the LF refining process is omitted, the nitrogen content in the steel is reduced, and there is no electrode consumption in the production process, thus reducing power consumption and carbon dioxide emission.

The Chinese patent document with Publication No. CN115058641A, published on September 16, 2022 and entitled "A Method for Smelting Low-Sulfur, Low-Aluminum, High-Carbon Steel for Wire Rod Using a Full Scrap Steel Electric Furnace ", discloses a method for smelting low-sulfur, low-aluminum, high-carbon steel for wire rod using a full scrap steel electric furnace. The method belongs to the field of metallurgical technology, and it comprises the processes of electric furnace smelting, LF refining, RH vacuum refining and continuous casting; the furnace charge in the electric furnace smelting process is all scrap steel, and the feeding sequence during tapping is ferrosilicon → carburant → ferromanganese → other alloys → slag material.

It can be seen that none of the above patent documents involves low-carbon footprint technology.

Although the Chinese patent document with Publication No. CN115433855A, published on December 6, 2022 and entitled "Aluminum Extrusion Having Low Carbon Footprint", discloses an aluminum extrusion having low carbon footprint and provides a composition of an alloy composition, about 60% of the alloy composition comes from Al scrap. However, this patent document belongs to the field of aluminum alloys and does not involve low-carbon footprint steel materials.

**Summary**

One object of the present invention is to provide an ultra-high strength steel with low carbon footprint. The ultrahigh-strength steel has a unique composition design and a low carbon equivalent, adopts a low-carbon emission steelmaking production process of electric furnace-LF furnace-RH-continuous casting, and it simultaneously uses all scrap steel as smelting raw material to replace molten iron with high carbon consumption, so that the ultrahigh-strength steel meets certain formability and bending requirements while also having the technical advantages of green and low carbon, and high strength and weight reduction.

To achieve the above objective, the present invention provides an ultra-high strength steel with low carbon footprint, which comprises Fe and inevitable impurities, and further comprises the following chemical elements with mass percentages as follows:

C: 0.06-0.12%, Si: 0.2-0.6%, Mn: 1.7-2.3%, Mo: 0.14-0.22%, Nb: 0.020-0.050%, Ti: 0.03-0.07%, Al: 0.02-0.06%, B: 0.0010-0.0030%, and N: 0.0050-0.0100%;
the distribution coefficient of N in the ultra-high strength steel satisfies: $N_{\text{solid solution}} / N_{\text{precipitation}} \geq 4.00$.

Accordingly, the present invention also provides an ultra-high strength steel with low carbon footprint, wherein the mass percentage of each chemical element is as follows:

C: 0.06-0.12%, Si: 0.2-0.6%, Mn: 1.7-2.3%, Mo: 0.14-0.22%, Nb: 0.020-0.050%, Ti: 0.03-0.07%, Al: 0.02-0.06%, B: 0.0010-0.0030%, N: 0.0050-0.0100%; and a balance of Fe and inevitable impurities;

the distribution coefficient of N in the ultra-high strength steel satisfies: $N_{solid\ solution} / N_{precipitation} \geq 4.00$.

It should be noted that the testing method for $N_{precipitation}$ in the ultra-high strength steel grade of the present invention is as follows: electrolytic extraction and separation of inclusions are performed on the material, and then the N content in the inclusions is measured as $N_{precipitation}$; $N_{solid\ solution} = N_{total} - N_{precipitation}$, wherein $N_{total}$ is the total N content in the material measured by the inert gas fusion thermal conductivity method in accordance with GB/T 20124.

In the present invention, the adoption of the electric furnace smelting route will result in a relatively high N content. N existing in the matrix in the form of solid solution can improve the strength of the material, whereas N existing in the form of precipitation will exist as TiN inclusions, and when the inclusion content is too high, the plasticity and bending performance of the material will be affected. Therefore, in the hot-rolled high-strength steel of the present invention, while controlling the mass percentage of N to be 0.0050-0.0100%, N should exist in the form of solid solution as much as possible, and the N distribution coefficient $N_{solid\ solution}/N_{precipitation}$ is controlled at $\geq 4.00$. In some embodiments, $N_{solid\ solution}/N_{precipitation}$ is between 4.00 and 6.00. In some embodiments, $N_{solid\ solution} \geq 0.0040$, such as between 0.0040 and 0.0090 or between 0.0040 and 0.0085. In some embodiments, $N_{precipitation} \leq 0.0020$, such as between 0.0005 and 0.0015 or between 0.0008 and 0.0015.

In addition, the design principles of each chemical element in the ultra-high strength steel of the present invention are described in detail are as follows:

C: In the ultra-high strength steel of the present invention, carbon directly affects the strength, weldability and formability of the steel plate/steel strip. The higher the carbon content, the more favorable it is to improve the strength of the steel plate. If the carbon content is below 0.06%, the strength of the steel plate/steel strip cannot meet the target requirement; if the carbon content is above 0.12%, the carbon equivalent tends to be excessively high, thereby deteriorating the weldability of the steel plate. Therefore, in the ultra-high strength steel of the present invention, the mass percentage of carbon may be controlled between 0.06% and 0.12%, and in some embodiments, the mass percentage of C may be controlled between 0.08% and 0.11%.

Si: In the ultra-high strength steel of the present invention, Si element can dissolve in ferrite and play a role in solid solution strengthening. Moreover, Si element can promote the enrichment of C and Mn elements in ferrite to austenite, reduce interstitial solid solution strengthening, inhibit the formation of coarse carbides during cooling, and improve the ductility of the steel. However, Si element tends to enrich and oxidize on the surface of the strip steel during annealing to form $SiO_2$ oxide film, which is difficult to be reduced by hydrogen and affects the surface quality. Meanwhile, relatively high Si element also exerts an adverse effect on the spot-welding performance of the steel plate. Therefore, in the ultra-high strength steel of the present invention, the mass percentage of silicon may be controlled between 0.2% and 0.6%, and in some embodiments, the mass percentage of Si may be controlled between 0.3% and 0.6%.

Mn: In the ultra-high strength steel of the present invention, Mn element is a solid solution strengthening element and a good desulfurizer, which is beneficial to improving the strength of the steel. Meanwhile, Mn can also enrich into austenite to exert a stabilizing effect, thereby helping to improve the plasticity of the steel. Therefore, in the ultra-high strength steel of the present invention, the mass percentage of Mn may be controlled between 1.7% and 2.3%, and in some embodiments, the mass percentage of Mn may be controlled between 1.9% and 2.1%.

Mo: In the ultra-high strength steel of the present invention, Mo element is a carbide element and also contributes to improving the hardenability of austenite. It can promote the shift of the ferrite, pearlite and bainite transformation regions to the right and expand the austenite region. However, an increase in Mo content tends to cause problems such as cold rolling edge cracks and increases the difficulty of material manufacturability. Therefore, in the ultra-high strength steel of the present invention, the mass percentage of Mo may be controlled between 0.14% and 0.22%, and in some embodiments, the mass percentage of Mo may be controlled between 0.16% and 0.20%.

Nb: In the ultra-high strength steel of the present invention, Nb element plays an important role in grain refinement. Besides, fine carbonitrides formed by the combination of Nb with C and N can delay recrystallization and prevent grain growth, exerting a significant strengthening effect. Therefore, in the ultra-high strength steel of the present invention, the mass percentage of Nb may be controlled between 0.020% and 0.050%, and in some embodiments, the mass percentage of Nb may be controlled between 0.025% and 0.045%.

Ti: In the ultra-high strength steel of the present invention, Ti can fix nitrogen in the steel to form stable compounds, improve the quality of the casting slab and the edge corner crack defect, and also form fine carbides to prevent austenite grain from growing and refine grains. Therefore, in the ultra-high strength steel of the present invention, the mass percentage of Ti may be controlled between 0.03% and 0.07%, and in some embodiments, the mass percentage of Ti may be controlled between 0.04% and 0.06%.

Al: In the ultra-high strength steel of the present invention, when Al exists in a solid solution state, it can inhibit cementite precipitation and improve austenite stability. Moreover, Al can form fine and dispersed insoluble particles with C and N, which can refine grains. However, an excessively high Al content in the steel tends to form a large amount of oxide inclusions, which is detrimental to the cleanliness of molten steel. Therefore, in the ultra-high strength steel of the present invention, the mass percentage of Al may be controlled between 0.02% and 0.06%, and in some embodiments, the mass percentage of Al may be controlled between 0.02% and 0.05%.

B: In the ultra-high strength steel of the present invention, the main function of B element is to improve the hardenability of the steel, thereby enhancing the steel strength. B tends to segregate at austenite grain boundaries and delays the transformation from austenite to ferrite, and a relatively low content can achieve an obvious effect. Meanwhile, B also has a good grain boundary purification effect, which can hinder the segregation of harmful elements at grain boundaries to a certain extent, thus improving the deformation coordination of the material. However, an excessively high B content will cause an increase in steel strength and is unfavorable for obtaining good plasticity. Therefore, in the ultra-high strength steel of the present invention, the mass percentage of B may be controlled between 0.0010% and 0.0030%, and in some embodiments, the mass percentage of B may be controlled between 0.0020% and 0.0030%.

Further, in the ultra-high strength steel of the present invention, it further comprises one or more of Cr, Ni, Cu and V. Wherein, when contained, the content of Cr is not more than 0.05wt%, the content of Ni is not more than 0.05wt%, the content of Cu is not more than 0.10wt%, and the content of V is not more than 0.05wt%.

In some embodiments, the ultra-high strength steel of the present invention further comprises residual elements of at least one of the following items:

$$Cr \leq 0.05wt\%;$$

$$Ni \leq 0.05wt\%;$$

$$Cu \leq 0.1wt\%;$$

and

$$V \leq 0.05wt\%.$$

In the present invention, since all scrap steel is used as the smelting raw material, residual elements such as Cr, Ni, Cu and V which are difficult to remove during steelmaking may be introduced from the raw material. Wherein, excessively high Cr element and Ni element will change the phase transformation law of the material, excessively high Cu element will cause hot rolling copper brittleness problem, and excessively high V element will also generate more precipitates to increase the strength of the material. Therefore, it is necessary to control the elements Cr, Ni, Cu and V within the ranges as described above.

Further, among the inevitable impurities in the ultra-high strength steel of the present invention, $P \leq 0.015\%$, $S \leq 0.0030\%$, and $Sn \leq 0.010\%$.

In the present invention, the inevitable impurities mainly comprise phosphorus (P), sulfur (S) and tin (Sn). The lower their contents, the purer the steel and the better the properties. Excessively high P content weakens grain boundaries, increases brittleness of the material, and deteriorates weldability. Therefore, in the ultra-high strength steel of the present invention, the mass percentage of P may be controlled to $P \leq 0.015\%$. Excessively high S content in the steel will significantly deteriorate the plasticity of the material. Therefore, in the ultra-high strength steel of the present invention, the mass percentage of S may be controlled to $S \leq 0.0030\%$. Sn is also a harmful element in steel; segregation at grain boundaries will adversely affect the toughness and plasticity of the material, and excessively high Sn content will also deteriorate the coating performance of the material. Therefore, in the ultra-high strength steel of the present invention, the Sn content may be controlled to $Sn \leq 0.010\%$.

Further, in the ultra-high strength steel of the present invention, it has a harmful element factor Hem of $\leq 0.0180\%$, wherein $Hem = Sn + N/2 + 2S$, and each chemical element in the formula is substituted by its mass percentage.

In the present invention, controlling the harmful element factor $Hem \leq 0.0180\%$ can further ensure the bending and hole expansion properties of the material.

Further, in the ultra-high strength steel of the present invention, it has a welding carbon equivalent $C_{eq}$ of $\leq 0.280\%$, wherein $C_{eq} = C + Mn/20 + Si/30 + 2P + 4S$, and each chemical element in the formula is substituted by its mass percentage.

In the present invention, when the mass percentages of C, Si, Mn, P and S satisfy the welding carbon equivalent $C_{eq} \leq 0.280\%$, better weldability can be further obtained, and at the same time, the material under such composition has good solid solution and structure strengthening effects, resulting in higher material strength. In some embodiments, $C_{eq} \leq 0.250\%$. In some embodiments, $C_{eq} \leq 0.240\%$. In some embodiments, $C_{eq}$ is between 0.220% and 0.240%.

Further, in the ultra-high strength steel of the present invention, the mass percentage of each chemical element further satisfies at least one of the following items:

C: 0.08-0.11%;
Si: 0.3-0.6%;
Mn: 1.9-2.1%;
Mo: 0.16-0.20%;
Nb: 0.025-0.045%;
Ti: 0.04-0.06%;
Al: 0.02-0.05%; and
B: 0.0020-0.0030%.

Further, in the ultra-high strength steel of the present invention, the microstructure comprises ferrite and martensite.

Further, in the ultra-high strength steel of the present invention, the volume fraction of martensite is 60-75%.

Further, in the ultra-high strength steel of the present invention, it has a yield strength of 700-850MPa, a tensile strength of ≥980MPa, preferably a tensile strength of ≥1020MPa, an elongation at break of ≥10.0%, preferably an elongation at break of ≥13.0%, an 180° cold bending performance of guaranteeing no cracking under 1T condition (i.e., no cracking when the spacer is 1 time the thickness of the plate), and a carbon footprint of ≤1.2 kgCO$_2$eq/kg. In some embodiments, the ultra-high strength steel of the present invention has a tensile strength of 980-1100 MPa. In some embodiments, the ultra-high strength steel of the present invention has a uniform elongation of ≥6.0%.

In addition, another object of the present invention is to provide a manufacturing method for an ultra-high strength steel with low carbon footprint. The manufacturing process is green and efficient, and the obtained ultra-high strength steel has the advantages of green and low carbon, high strength and weight reduction.

To achieve the above object, the present invention provides a manufacturing method for an ultra-high strength steel with low carbon footprint, comprising the steps of:

full scrap steel is used for electric furnace smelting, LF, RH and continuous casting; wherein in the RH process, the vacuum treatment time is ≤10min, such as 3-10min, and soft blowing is performed for 15-25min after breaking the vacuum;

hot rolling and coiling;

cold rolling;

continuous annealing: first holding at an annealing holding temperature of 760-820°C for 60-200s, then cooling to a rapid cooling start temperature of 650-690°C at a first cooling rate of 3-10°C/s, then cooling to a rapid cooling end temperature of 220-260°C at a second cooling rate of 40-80°C/s, subsequently holding for 200-400s for aging treatment, and finally cooling to 100°C or below at a third cooling rate of 2-10°C/s.

The above smelting and casting processes of the present invention specifically comprise: electric furnace-LF furnace-RH-continuous casting. The conventional blast furnace-converter manufacturing process has a long flow, and due to the adoption of the method of reducing iron ore with coke, the carbon footprint of the final product is obviously relatively high, basically at a level of 2.5-3.0 kgCO$_2$eq/kg. And the ironmaking and steelmaking processes account for nearly 70% of the whole process, which is the link with the highest carbon footprint. Furthermore, conventional electric furnace smelting is mostly suitable for medium-high carbon, stainless steel or special steel products, and rarely involved in medium-low carbon high-strength steel for automobiles with control of impurity elements such as low S and N.

However, the present invention adopts the method of full scrap steel electric furnace smelting, which can significantly reduce the carbon emission level of the steelmaking smelting process. In addition, the present invention adopts short vacuum time plus long soft blowing time in RH. In some embodiments, vacuum pumping may be performed to ≤100Pa and maintained for ≤10 min followed by breaking the vacuum; after breaking the vacuum, soft blowing is carried out for 15-25min, with the soft blowing effect controlled such that the slag surface is just not disturbed; it is then held for a period of time, such as 10min, and then hoisted to continuous casting for casting.

In the present invention, vacuum treatment can reduce the N content in molten steel, but the decrease of N content is not obvious after an excessively long vacuum treatment time, and long-time vacuum is unfavorable for the plasticization treatment of inclusions; long-time soft blowing after breaking the vacuum can remove inclusions (mainly nitride and sulfide inclusions) or realize plasticization treatment of inclusions. Therefore, adopting short vacuum time and long soft blowing time in the RH vacuum refining process can effectively control the content of inclusions and gases. Since the N content of tapping from the scrap steel electric furnace is obviously higher than that of the conventional converter process, the controllable lower limit of N can reach 50 ppm level through RH treatment, and TiN inclusions in the molten steel can be basically greatly removed and retained in the slag through such treatment.

Furthermore, in the manufacturing method for the ultra-high strength steel of the present invention, the deformed structure after cold rolling is subjected to dual-phase region annealing by holding at an annealing holding temperature of 760-820°C for 60-200s. The main purpose of this process is to recrystallize the structure of the cold-rolled steel plate. If the temperature is too low, the recrystallization of the structure of the steel plate will be incomplete, while if the temperature is too high, the structure of the steel plate will easily become coarse-grained and the precipitates will decompose, thereby reducing the strength of the steel plate. Therefore, in the present invention, the annealing holding temperature is controlled at 760-820°C. Similarly, the time control in this process is also critical. If the time is too short, the recrystallization of the structure of the steel plate will be incomplete and the diffusion of austenite stabilizing elements (C, Mn) will be insufficient, while if the time is too long, abnormal conditions such as abnormally coarse grains and decomposition of precipitates will easily occur in the structure of the steel plate. Therefore, the annealing holding time is controlled at 60-200s. During this process, the structure of the steel plate is partially austenitized, and the cold-rolled deformed grains will complete the recovery and recrystallization process.

In addition, the heat-held steel strip is slowly cooled to 650-690°C at a first cooling rate of 3-10°C/s, which allows part of the austenite in the structure of the steel plate to transform into ferrite first. Such ferrite is finer than the recrystallized ferrite in the dual-phase region, which is beneficial to the coordination of the soft and hard phases during final deformation and the improvement of material plasticity.

Furthermore, the second cooling rate is controlled at 40-80°C/s, and the slowly cooled steel strip is rapidly cooled to 220-260°C by blowing gas for rapid cooling, followed by holding for 200-400s for aging treatment. This is because pearlite will form if the cooling rate is too low during this process, which degrades the properties of the steel plate; while an excessively high cooling rate will increase difficulty of the production and manufacturing cost. Therefore, the second cooling rate is controlled at 40-80°C/s. During the rapid cooling process, the remaining austenite is almost completely transformed into martensite, thereby greatly improving the strength. During the aging process, the quenched martensite undergoes a low-temperature tempering reaction, and the lamellar martensite obtained by quenching is slightly decomposed with carbide precipitation, which is beneficial to the improvement of material toughness and avoids cold brittle fracture.

In addition, the steel strip that has undergone aging treatment is finally cooled to 100°C or below at a third cooling rate of 2-10°C/s. The structure of the steel hardly changes below this temperature.

Further, in the electric furnace smelting process of the manufacturing method for the ultra-high strength steel of the present invention, the scrap steel adopted comprises three types of light scrap steel, medium scrap steel and heavy scrap steel, with a weight ratio of light scrap steel: medium scrap steel: heavy scrap steel = (3-3.5): (1.5-2): 1.

Herein, light scrap steel refers to finished scrap steel, trimmings, and similar materials in lump or irregular shape, with lump size requirements: $<300\times800\times1800$mm and a single weight $\leq 0.5$ ton. Medium scrap steel refers to machine scrap steel parts, components and similar materials in lump or irregular shape, with lump size requirements: $<300\times500\times1500$mm and a single weight $\leq 1.0$ ton. Heavy scrap steel refers to scrap steel ingots, primary rolled billets and similar materials in lump shape, with lump size requirements: $<300\times500\times1500$mm and a single weight $\leq 2.0$ tons.

In the electric furnace smelting step of the present invention, clean and uncontaminated scrap steel materials are selected. When adding the scrap steel charge, 1-2t of light scrap steel is first laid on the bottom of the electric furnace as a lining to prevent impact and damage to the furnace lining when a large amount of scrap steel (especially heavy scrap steel) is poured in. A large-flow oxygen lance is used for oxygen blowing to assist melting and dephosphorization during smelting. The end-point composition of the electric furnace is controlled as follows: C $\leq 0.05$ wt%, P $\leq 0.01$ wt%, S $\leq 0.03$ wt%, and the $T_{tapping}$ is controlled at $\geq 1630$°C. After tapping, slag removal is carried out at the slag removal station, and the amount of residual slag is controlled at $\leq 40$mm.

In some embodiments, in the **LF** process, after the ladle enters the **LF** station, Al is first added for deep deoxidation. When sampling analysis Al is $\geq 0.03$ wt%, carburant, ferrosilicon and ferromanganese are added for carbon replenishment and deoxidation alloying treatment, and slag materials are added simultaneously for slag formation and desulfurization. Herein, the slag materials may be lime and fluorite. The addition amount of lime may be 6-8 kg/t steel, and the addition amount of fluorite may be 1-2 kg/t steel, so as to preferably control the slag basicity to 1.8-2.5 and the S content is reduced to within 30 ppm. After desulfurization is completed, Nb, Ti and B alloys required by the composition are added. After all alloy components have been added in place, it is prepared to exit the station, while excess desulfurization slag is skimmed off and the amount of residual slag is controlled at $\leq 30$ mm.

Further, in the continuous casting process of the manufacturing method of the ultra-high strength steel of the present invention, the superheat is controlled at $\leq 30$°C, the mold taper is controlled at 1.0-1.3%, and the continuous casting speed is controlled at 1.0-1.5 m/min.

In the continuous casting process of the present invention, a certain superheat of molten steel is required to ensure the smooth progress of the continuous casting process. When the superheat is higher than 30°C, it is detrimental to the central internal quality of the cast slab and tends to cause defects such as segregation and shrinkage cavity. Therefore, in the present invention, the superheat may be controlled at $\leq 30$°C, such as 15-30°C. Meanwhile, to better control the quality of the surface of the cast slab and prevent defects such as minor longitudinal cracks, a chamfered mold is adopted to improve the stress distribution, and the mold taper is controlled within 1.0-1.3%. To balance production efficiency and quality of the surface of the cast slab, the continuous casting speed is controlled within 1.0-1.5 m/min. Dynamic soft reduction and electromagnetic stirring are adopted during casting to better improve the degree of segregation of the cast slab.

Further, in the hot rolling process of the manufacturing method for the ultra-high strength steel of the present invention, the slab heating temperature is controlled at 1200-1260°C, and the finish rolling temperature is controlled at 850-950°C.

In the hot rolling process of the present invention, the cast slab may first be heated at a high temperature in the full austenite region for a period to soften the material and uniformly diffuse the components. After rough rolling to the thickness specification of the intermediate slab, the coarse structure formed in the heating furnace is broken and refined. After finish rolling further to the required thickness, a uniform and fine recrystallized material structure is formed. When the finish rolling temperature is lower than 850°C, ferrite will precipitate before finish rolling, resulting in a relatively low content of hard phase in the final structure, leading to insufficient strength in hot rolling state, and further affecting the subsequent cold rolling and annealing performance. Considering the control of upper limit of slab heating temperature and temperature drop during rolling, the finish rolling temperature generally does not exceed 950°C. Therefore, in the present invention, the finish rolling temperature may be controlled at 850-950°C.

Further, in the coiling step of the manufacturing method for the ultra-high strength steel of the present invention, the coiling temperature is controlled at 580-660°C.

In the present invention, the hot rolling coiling temperature also affects the properties of the hot-rolled state. When the coiling temperature is higher than 660°C, internal oxidation of Si and Mn tends to occur on the surface of the steel, and a surface broken layer will be formed after pickling, which affects the quality of the surface of the final product. While when the coiling temperature is lower than 580°C, the strength in the hot-rolled state is excessively high, which is unfavorable for the subsequent cold rolling, and will result in excessive deformation resistance, thus causing cold rolling edge cracks or poor shape problems. Therefore, preferably, in the present invention, the coiling temperature may be controlled at 580-660°C.

Further, in the cold rolling step of the manufacturing method for the ultra-high strength steel of the present invention, the cold rolling reduction rate is controlled at 50-70%.

In the present invention, after pickling to remove the surface scale of the hot-rolled coil, a cold rolling reduction of 50-70% can make the steel plate reach the target thickness dimension and accumulate certain deformation energy, which is more favorable for the subsequent annealing recrystallization.

The ultra-high strength steel with low carbon footprint and the manufacturing method therefor of the present invention have the following advantages and beneficial effects:

The ultra-high strength steel with low carbon footprint of the present invention has a relatively low carbon equivalent through specific composition design, and controls N to exist in a solid solution form as much as possible, and controls the N distribution coefficient $N_{solid\ solution}/N_{precipitation} \geq 4.00$, so as to improve the strength of the material and ensure the plasticity and bending performance of the material.

The manufacturing method of the ultra-high strength steel with low carbon footprint of the present invention adopts an electric furnace full scrap steel smelting technical route, so that the prepared ultra-high strength steel has the technical advantage of green and low carbon. Moreover, through the control of scrap steel raw materials and steelmaking technology, the impurities and residual elements of the product are all controlled at a relatively low level, so as not to affect the properties of the material.

The manufacturing method of the ultra-high strength steel plate with low carbon footprint of the present invention aiming at the characteristic of high N content in the electric furnace full scrap steel smelting route, creatively makes most of N to exist in the material in a solid solution form through RH process control, so as to improve the material strength without damaging the local formability of the material.

In some embodiments, the ultra-high strength steel with low carbon footprint of the present invention has a yield strength of 700-850 MPa, a tensile strength of $\geq$ 980 MPa, an elongation at break of $\geq$ 10%, an 180° cold bending performance of guaranteeing no cracking under 1T condition (i.e., no cracking when the spacer is 1 time the thickness of the plate), and a carbon footprint of $\leq$1.2 kgCO$_2$eq/kg at the same time, realizing the balance between green and low carbon, and ultra-high strength performance.

## Description of the Drawing

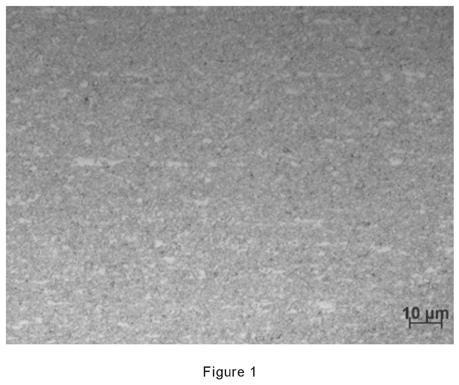

Figure 1 shows the microstructure morphology of the ultra-high strength steel with low carbon footprint of Example 7 of the present invention.

## Detailed Description

The ultra-high strength steel plate with low carbon footprint and the manufacturing method therefor of the present invention will be further explained and illustrated below with reference to specific examples. However, such explanations and illustrations do not constitute an improper limitation on the technical solution of the present invention.

**Examples 1-20 and Comparative Examples 1-3**

The ultra-high strength steels with low carbon footprint of Examples 1-20 of the present invention are all prepared through the following steps:

(1) Full scrap steel is used for electric furnace smelting, LF, RH and continuous casting:
Wherein, in the electric furnace smelting process, the types of full scrap steel comprise three kinds: light scrap steel, medium scrap steel and heavy scrap steel, and clean and uncontaminated scrap steel materials are selected. When adding the scrap steel charge, 1-2 t of light scrap steel is first laid on the bottom of the electric furnace as a lining to prevent impact and damage to the furnace lining when a large amount of scrap steel (especially heavy scrap steel) is poured in. A large-flow oxygen lance is used for oxygen blowing to assist melting and dephosphorization during smelting. The end-point composition of the electric furnace is controlled as follows: $C \leq 0.05$ wt%, $P \leq 0.01$ wt%, $S \leq 0.03$ wt%, and $T_{tapping}$ is controlled at $\geq 1630°C$. After tapping, slag removal is carried out at the slag removal station, and the amount of residual slag is controlled at $\leq 40$ mm.

In a preferred embodiment, the weight ratio of light scrap steel: medium scrap steel: heavy scrap steel = (3-3.5): (1.5-2): 1.

In the LF process, after the ladle enters the LF station, Al is first added for deep deoxidation. When sampling analysis Al is $\geq 0.03$ wt%, carburant, ferrosilicon and ferromanganese are added for carbon replenishment and deoxidation alloying treatment, and slag materials are added simultaneously for slag formation and desulfurization. Wherein, the slag materials are lime and fluorite. The addition amount of lime may be 6-8 kg/t steel, and the addition amount of fluorite may be 1-2 kg/t steel, so as to preferably control the slag basicity to 1.8-2.5 and the S content is reduced to within 30 ppm. After desulfurization is completed, Nb, Ti and B alloys required by the composition are added. After all alloy components have been added in place, it is prepared to exit the station, while excess desulfurization slag is skimmed off and the amount of residual slag is controlled at $\leq 30$ mm.

In the RH process: after the ladle enters the RH station, vacuum is applied to $\leq 100Pa$ and maintained for $\leq 10$ min followed by breaking the vacuum; after breaking the vacuum, soft blowing is carried out for 15-25min, with the soft blowing effect controlled such that the slag surface is just not disturbed; and it is then held for about 10min, and then hoisted to continuous casting for casting.

In the continuous casting step: the superheat is controlled at 15-30°C, the mold taper is controlled at 1.0-1.3%, and the continuous casting speed is controlled at 1.0-1.5m/min. The chemical compositions of the obtained cast slabs are shown in Table 1-1, Table 1-2 and Table 1-3.

(2) Hot rolling and coiling: the slab heating temperature is 1200-1260°C, rough rolling is performed followed by finish rolling, the finish rolling temperature is 850-950°C, and water cooling is performed after rolling to the coiling temperature of 580-660°C.

(3) Pickling to remove scale.

(4) Cold rolling: a reduction rate of 50-70% is adopted.

(5) Continuous annealing: after holding at an annealing holding temperature of 760-820°C for 60-200s, cooling to a rapid cooling start temperature of 650-690°C at a first cooling rate of 3-10°C/s to obtain ferrite with a certain proportion; then rapidly cooling to a rapid cooling end temperature of 220-260°C at a second cooling rate of 40-80°C/s; then holding for 200-400s for aging treatment; finally cooling to below 100°C at a third cooling rate of 2-10°C/s

Table 1.1. (wt%, with a balance of Fe and other inevitable impurities excluding P, S, and Sn)

| Steel grade composition number | C | Si | Mn | Mo | Nb | Ti | Al | B | N |
|---|---|---|---|---|---|---|---|---|---|
| A | 0.06 | 0.6 | 2.3 | 0.16 | 0.020 | 0.03 | 0.02 | 0.0010 | 0.0050 |
| B | 0.08 | 0.5 | 2.1 | 0.14 | 0.025 | 0.04 | 0.03 | 0.0015 | 0.0061 |
| C | 0.10 | 0.4 | 1.9 | 0.22 | 0.045 | 0.05 | 0.04 | 0.0020 | 0.0070 |
| D | 0.11 | 0.3 | 1.8 | 0.18 | 0.050 | 0.06 | 0.05 | 0.0025 | 0.0085 |
| E | 0.12 | 0.2 | 1.7 | 0.20 | 0.040 | 0.07 | 0.06 | 0.0030 | 0.0100 |
| a | **0.05** | 0.5 | 2.2 | 0.15 | 0.02 | 0.03 | 0.06 | **0.0005** | 0.0065 |
| b | 0.08 | **0.8** | 2.0 | 0.17 | 0.03 | 0.04 | 0.04 | **0.0045** | 0.0080 |
| c | 0.10 | **0.1** | 1.8 | 0.20 | 0.04 | 0.05 | 0.03 | 0.0020 | **0.0150** |

Table 1.2. (wt%, with a balance of Fe and other inevitable impurities excluding P, S, and Sn)

| Steel grade composition number | Cr | Ni | Cu | V | P | S | Sn |
|---|---|---|---|---|---|---|---|
| A | 0.05 | - | - | - | 0.015 | 0.0030 | 0.008 |
| B | - | 0.04 | 0.06 | - | 0.009 | 0.0025 | 0.009 |
| C | - | 0.05 | - | 0.04 | 0.005 | 0.0020 | 0.003 |
| D | 0.04 | 0.03 | 0.05 | - | 0.010 | 0.0023 | 0.005 |
| E | 0.03 | - | 0.08 | - | 0.008 | 0.0015 | 0.006 |
| a | **0.10** | - | - | - | 0.007 | 0.0030 | 0.006 |
| b | - | - | **0.15** | - | 0.010 | 0.0028 | **0.012** |
| c | 0.03 | 0.04 | - | - | 0.010 | 0.0015 | 0.007 |

Table 1-3. Composition Control Coefficients

| Steel grade composition number | Ceq (%) | Hem (%) | $N_{solid\ solution}$ | $N_{precipitation}$ | $N_{solid\ solution}/N_{precipitation}$ |
|---|---|---|---|---|---|
| A | 0.237 | 0.0165 | 0.0042 | 0.0008 | 5.25 |
| B | 0.230 | 0.0171 | 0.0051 | 0.0010 | 5.10 |
| C | 0.226 | 0.0105 | 0.0060 | 0.0010 | 6.00 |
| D | 0.239 | 0.0139 | 0.0070 | 0.0015 | 4.67 |
| E | 0.234 | 0.0140 | 0.0085 | 0.0015 | 5.67 |
| a | 0.203 | 0.0153 | 0.0030 | 0.0035 | **0.86** |
| b | 0.238 | **0.0216** | 0.0040 | 0.0040 | **1.00** |
| c | 0.219 | 0.0175 | 0.0110 | 0.0040 | **2.75** |
| Note: in Table 3, Hem = Sn + N/2 + 2S and Ceq = C + Mn/20 + Si/30 + 2P + 4S, and each chemical element in the formulas is substituted by its mass percentage. | | | | | |

In Tables 1-1, 1-2, and 1-3, steel grades A-E are the steel grade numbers used in the examples of the present invention, and a-c are the steel grade numbers used in the comparative examples.

Tables 2-1 and 2-2 list the specific process parameters for each example and comparative example of the present invention in the above process steps.

Table 2-1.

| No. | Steel grade composition numbers adopted | Scrap steel weight ratio (light : medium : heavy) | LF desulfurization slag basicity | RH vacuum treatment time (min) | RH soft blowing time (min) | Continuous casting superheat (°C) | Mold taper (%) | Continuous casting speed (m/min) | Slab heating temperature (°C) | Finishing rolling temperature (°C) | Average coiling temperature (°C) |
|---|---|---|---|---|---|---|---|---|---|---|---|
| Ex. 1 | A | 3:2:1 | 1.8 | 10 | 15 | 15 | 1.0 | 1.0 | 1220 | 903 | 586 |
| Ex. 2 | A | 3:2:1 | 1.8 | 9 | 16 | 15 | 1.0 | 1.0 | 1235 | 910 | 590 |
| Ex. 3 | A | 3:2:1 | 1.8 | 8 | 17 | 15 | 1.0 | 1.0 | 1200 | 908 | 580 |
| Ex. 4 | A | 3:2:1 | 1.8 | 7 | 18 | 15 | 1.0 | 1.0 | 1200 | 925 | 590 |
| Ex. 5 | B | 3.5:2:1 | 2.0 | 6 | 19 | 20 | 1.0 | 1.0 | 1230 | 930 | 630 |
| Ex. 6 | B | 3.5:2:1 | 2.0 | 5 | 20 | 20 | 1.0 | 1.0 | 1210 | 950 | 597 |
| Ex. 7 | B | 3.5:2:1 | 2.0 | 4 | 21 | 20 | 1.0 | 1.0 | 1250 | 917 | 620 |
| Ex. 8 | B | 3.5:2:1 | 2.0 | 3 | 22 | 20 | 1.0 | 1.0 | 1210 | 920 | 602 |
| Ex. 9 | C | 3:1.5:1 | 2.2 | 10 | 23 | 25 | 1.1 | 1.2 | 1230 | 850 | 655 |
| Ex. 10 | C | 3:1.5:1 | 2.2 | 9 | 24 | 25 | 1.1 | 1.2 | 1245 | 920 | 590 |
| Ex. 11 | C | 3:1.5:1 | 2.2 | 8 | 25 | 25 | 1.1 | 1.2 | 1210 | 924 | 660 |
| Ex. 12 | C | 3:1.5:1 | 2.2 | 7 | 20 | 25 | 1.1 | 1.2 | 1200 | 939 | 580 |
| Ex. 13 | D | 3.5:1.5:1 | 2.3 | 6 | 21 | 30 | 1.2 | 1.3 | 1250 | 875 | 580 |
| Ex. 14 | D | 3.5:1.5:1 | 2.3 | 5 | 22 | 30 | 1.2 | 1.3 | 1230 | 906 | 625 |
| Ex. 15 | D | 3.5:1.5:1 | 2.3 | 4 | 23 | 30 | 1.2 | 1.3 | 1210 | 885 | 645 |
| Ex. 16 | D | 3.5:1.5:1 | 2.3 | 3 | 24 | 30 | 1.2 | 1.3 | 1260 | 945 | 600 |
| Ex. 17 | E | 3.2:2:1 | 2.5 | 9 | 15 | 23 | 1.3 | 1.5 | 1230 | 870 | 590 |
| Ex. 18 | E | 3.2:2:1 | 2.5 | 8 | 15 | 23 | 1.3 | 1.5 | 1220 | 890 | 630 |
| Ex. 19 | E | 3.2:2:1 | 2.5 | 7 | 25 | 23 | 1.3 | 1.5 | 1260 | 900 | 620 |
| Ex. 20 | E | 3.2:2:1 | 2.5 | 6 | 25 | 23 | 1.3 | 1.5 | 1210 | 930 | 590 |
| Comp. Ex. 1 | a | - | 1.9 | 5 | **_10_** | **_40_** | 1.1 | 1.3 | **_1280_** | **_830_** | **_700_** |
| Comp. Ex. 2 | b | 3:2:1 | 1.6 | 10 | **_13_** | 20 | 1.1 | 1.3 | 1250 | 917 | **_520_** |

| No. | Steel grade composition numbers adopted | Scrap steel weight ratio (light : medium : heavy) | LF desulfurization slag basicity | RH vacuum treatment time (min) | RH soft blowing time (min) | Continuous casting superheat (°C) | Mold taper (%) | Continuous casting speed (m/min) | Slab heating temperature (°C) | Finishing rolling temperature (°C) | Average coiling temperature (°C) |
|---|---|---|---|---|---|---|---|---|---|---|---|
| Comp. Ex. 3 | c | 3:2:1 | 2.4 | 10 | **_12_** | 30 | 1.1 | 1.3 | 1220 | **_830_** | 590 |

Note: The symbol "-" in the scrap steel weight ratio column of Comparative Example 1 indicates that it does not adopt the electric furnace full scrap steel smelting process, but still adopts the converter steelmaking process using conventional blast furnace hot metal.

Table 2-2.

| No. | Average cold rolling reduction rate (%) | Annealing holding temperature (°C) | Annealing holding time (s) | First cooling rate (°C/s) | Fast cooling start temperature (°C) | Fast cooling finish temperature (°C) | Second cooling rate (°C/s) | Aging holding time (s) | Third cooling rate (°C/s) | Third cooling final temperature (°C) |
|---|---|---|---|---|---|---|---|---|---|---|
| Ex. 1 | 70 | 820 | 60 | 8 | 690 | 220 | 60 | 300 | 10 | 100 |
| Ex. 2 | 60 | 790 | 60 | 7 | 675 | 230 | 40 | 350 | 6 | 90 |
| Ex. 3 | 60 | 810 | 60 | 4 | 690 | 240 | 40 | 250 | 7 | 80 |
| Ex. 4 | 50 | 780 | 60 | 8 | 650 | 250 | 50 | 400 | 5 | 70 |
| Ex. 5 | 60 | 760 | 100 | 3 | 670 | 260 | 40 | 400 | 7 | 60 |
| Ex. 6 | 60 | 810 | 100 | 9 | 660 | 220 | 50 | 350 | 7 | 50 |
| Ex. 7 | 70 | 798 | 100 | 5 | 665 | 230 | 50 | 300 | 6 | 40 |
| Ex. 8 | 70 | 805 | 100 | 4 | 690 | 240 | 80 | 200 | 2 | 30 |
| Ex. 9 | 50 | 810 | 80 | 8 | 685 | 250 | 40 | 300 | 3 | 20 |
| Ex. 10 | 50 | 820 | 80 | 9 | 680 | 260 | 40 | 300 | 6 | 100 |
| Ex. 11 | 60 | 808 | 80 | 6 | 690 | 220 | 60 | 400 | 7 | 90 |
| Ex. 12 | 60 | 800 | 80 | 8 | 655 | 230 | 60 | 250 | 9 | 80 |
| Ex. 13 | 60 | 805 | 150 | 6 | 660 | 240 | 50 | 400 | 7 | 70 |
| Ex. 14 | 60 | 815 | 150 | 5 | 670 | 250 | 50 | 350 | 6 | 60 |
| Ex. 15 | 70 | 820 | 150 | 7 | 687 | 220 | 60 | 300 | 6 | 50 |
| Ex. 16 | 70 | 790 | 150 | 10 | 690 | 230 | 60 | 300 | 5 | 40 |
| Ex. 17 | 50 | 812 | 200 | 4 | 655 | 240 | 40 | 250 | 7 | 30 |
| Ex. 18 | 50 | 809 | 200 | 8 | 675 | 250 | 40 | 250 | 6 | 20 |
| Ex. 19 | 60 | 810 | 200 | 7 | 685 | 260 | 70 | 350 | 8 | 60 |
| Ex. 20 | 60 | 798 | 200 | 6 | 678 | 240 | 70 | 350 | 5 | 50 |
| Comp . Ex. 1 | 60 | 850 | 130 | 8 | 660 | **320** | 50 | 400 | **16** | **40** |
| Comp . Ex. 2 | 50 | 820 | 150 | 5 | 680 | 250 | **30** | 390 | 7 | 30 |
| Comp . Ex. 3 | 50 | 810 | **250** | **20** | 600 | 220 | 40 | **150** | 7 | 30 |

The specimens of Examples 1-20 and Comparative Examples 1-3 obtained are etched with a 4% nitric acid-alcohol solution on the polished bright surfaces without obvious scratches, and the etchant is wiped with clean experimental cotton balls for a wiping time of about 15s to observe the microstructure. The whitish and bright regions in the microstructure are ferrite, and the fine and dark structures are martensite. The observation results are listed in Table 3.

In addition, Figure 1 also shows the microstructure morphology of the ultra-high strength steel with low carbon footprint of Example 7 of the present invention. As shown in Figure 1, the microstructure of the ultra-high strength steel with low carbon footprint is ferrite + martensite.

In addition, the specimens of Examples 1-20 and Comparative Examples 1-3 obtained are subjected to mechanical property tests in accordance with ISO 6892:1998 (Metallic materials-Tensile testing at room temperature) and the P14 ($A_{50}$) tensile specimen standard, and the carbon footprint is calculated. The test results are listed in Table 3. The boundary for product carbon footprint calculation is from cradle to gate. The specific calculation method and product classification comply with ISO 14067 "Greenhouse gas-Carbon footprint of products-Requirements and guidelines for quantification" and CISA EPD Platform PCR 2022:01 "General and special steel products".

Table 3.

| No. | Yield Strength (MPa) | Tensile Strength (MPa) | Uniform Elongation / % | Elongation at Fracture (%) | Volume Fraction of Ferrite (%) | Volume Fraction of Martensite (%) | 180° cold bending | Carbon Footprint (kgCO$_2$eq/kg) |
|---|---|---|---|---|---|---|---|---|
| Ex. 1 | 770 | 1077 | 7.2 | 12.3 | 35 | 65 | 1T | 1.18 |
| Ex. 2 | 741 | 1056 | 8.1 | 13.1 | 33 | 67 | 1T | 1.16 |
| Ex. 3 | 753 | 1043 | 7.9 | 13.4 | 30 | 70 | 1T | 1.12 |
| Ex. 4 | 735 | 1051 | 7.4 | 12.8 | 28 | 72 | 1T | 1.07 |
| Ex. 5 | 721 | 1007 | 9.1 | 15.3 | 34 | 66 | 1T | 1.12 |
| Ex. 6 | 705 | 982 | 9.8 | 15.8 | 40 | 60 | 0T | 1.15 |
| Ex. 7 | 795 | 1021 | 8.9 | 14.8 | 31 | 69 | 1T | 1.17 |
| Ex. 8 | 802 | 1007 | 10.2 | 16.3 | 26 | 74 | 0T | 1.10 |
| Ex. 9 | 797 | 1036 | 8.7 | 14.3 | 34 | 66 | 1T | 1.20 |
| Ex. 10 | 761 | 1057 | 8.9 | 14.8 | 32 | 68 | 1T | 1.09 |
| Ex. 11 | 823 | 1067 | 8.6 | 14.2 | 30 | 70 | 1T | 1.14 |
| Ex. 12 | 809 | 1050 | 8.7 | 14.7 | 35 | 65 | 1T | 1.16 |
| Ex. 13 | 700 | 998 | 9.8 | 16.1 | 38 | 62 | 0T | 1.12 |
| Ex. 14 | 740 | 1045 | 8.9 | 15.1 | 27 | 73 | 1T | 1.03 |
| Ex. 15 | 805 | 1015 | 8.9 | 15.3 | 36 | 64 | 1T | 1.06 |
| Ex. 16 | 764 | 1038 | 8.1 | 13.8 | 33 | 67 | 1T | 1.18 |
| Ex. 17 | 768 | 1076 | 6.3 | 11.3 | 29 | 71 | 1T | 1.15 |
| Ex. 18 | 749 | 1062 | 8.7 | 14.2 | 33 | 67 | 1T | 1.13 |
| Ex. 19 | 760 | 1021 | 8.9 | 14.8 | 36 | 64 | 1T | 1.15 |
| Ex. 20 | 850 | 1098 | 6.1 | 10.3 | 25 | 75 | 1T | 1.05 |
| Comp. Ex. 1 | **620** | **898** | 6.8 | 11.3 | **43** | **57** | 2T | **2.89** |
| Comp. Ex. 2 | **720** | 1056 | 4.2 | 8.9 | 31 | 69 | 3T | 1.16 |
| Comp. Ex. 3 | **612** | 983 | 4.5 | 8.6 | **41** | **59** | 3T | 1.18 |

It can be seen from Table 3 that Examples 1-20 of the present invention obtain ideal structural characteristics through reasonable chemical element composition design combined with optimized process parameters. While ensuring strength, the plasticity performance is excellent. The yield strength is between 700-850MPa, the tensile strength is all greater than or equal to 980MPa, the uniform elongation is all more than 6.0%, the elongation at break is greater than or equal to 10.3%, and the 180° cold bending performance is excellent, all meeting the requirement of no cracking under 1T condition.

It can also be seen that the carbon footprint levels of Examples 1-20 of the present invention are all less than or equal to 1.2 $kgCO_2eq/kg$, with low carbon emission levels, meeting the technical requirements of green and low carbon. In contrast, Comparative Example 1 still adopts the conventional converter route using blast furnace hot metal, resulting in a relatively high carbon footprint.

Different from the present invention, each comparative example fails to achieve the technical effects achievable by the present invention because the composition or process parameters do not meet the design requirements of the present invention.

It should be noted that the combination modes of the various technical features in the present application are not limited to the combination modes recited in the claims of the present application or the combination modes recited in the specific examples. All the technical features described in the present application may be freely combined or integrated in any manner unless there is a contradiction therebetween.

It should also be noted that the above-listed examples are only specific examples of the present invention. Obviously, the present invention is not limited to the above examples. Similar changes or modifications made therefrom, which can be directly derived from or easily associated with by those skilled in the art from the disclosure of the present invention, shall all fall within the scope of protection of the present invention.

**Claims**

1. An ultra-high strength steel plate with low carbon footprint, comprising Fe and inevitable impurities, wherein it further comprises the following chemical elements with mass percentages as follows:

   C: 0.06-0.12%, Si: 0.2-0.6%, Mn: 1.7-2.3%, Mo: 0.14-0.22%, Nb: 0.020-0.050%, Ti: 0.03-0.07%, Al: 0.02-0.06%, B: 0.0010-0.0030%, and N: 0.0050-0.0100%;

   wherein the distribution coefficient of N in the ultra-high strength steel satisfies: $N_{solid\ solution}/N_{precipitation} \geq 4.00$.

2. The ultra-high strength steel plate according to claim 1, wherein mass percentage of each chemical element is as follows:

   C: 0.06-0.12%, Si: 0.2-0.6%, Mn: 1.7-2.3%, Mo: 0.14-0.22%, Nb: 0.020-0.050%, Ti: 0.03-0.07%, Al: 0.02-0.06%, B: 0.0010-0.0030%, N: 0.0050-0.0100%; and a balance of Fe and inevitable impurities.

3. The ultra-high strength steel plate according to claim 1 or 2, wherein it further comprises residual elements of at least one of the following:

   Cr≤0.05wt%;

   Ni≤0.05wt%;

   Cu≤0.10wt%;

   and

   V≤0.05wt%.

4. The ultra-high strength steel plate according to claim 1 or 2, wherein among the inevitable impurities P≤0.015%, S≤0.003%, and Sn≤0.01%.

5. The ultra-high strength steel plate according to claim 4, wherein it has a harmful element factor Hem of ≤0.018%, wherein Hem=Sn+N/2+2S and each chemical element in the formula is substituted by its mass percentage; and/or it has a welding carbon equivalent Ceq of ≤0.28%, Ceq=C+Mn/20+Si/30+2P+4S and each chemical element in the formula is substituted by its mass percentage.

6. The ultra-high strength steel plate according to claim 1 or 2, wherein the mass percentage of each chemical element further satisfies at least one of the following items:

C: 0.08-0.11%;
Si: 0.3-0.6%;
Mn: 1.9-2.1%;
Mo: 0.16-0.20%;
Nb: 0.025-0.045%;
Ti: 0.04-0.06%;
Al: 0.02-0.05%; and
B: 0.002-0.003%.

7. The ultra-high strength steel plate according to claim 1 or 2, wherein its microstructure comprises ferrite and martensite; preferably, a volume fraction of martensite is 60-75%.

8. The ultra-high strength steel plate according to claim 1 or 2, wherein it has a yield strength of 700-850MPa, a tensile strength of ≥980MPa, an elongation at break of ≥10.0%, an 180° cold bending performance of guaranteeing no cracking under 1T condition, and a carbon footprint of ≤1.2kgCO2eq/kg; preferably, it has a tensile strength of ≥1020MPa; preferably, it has a uniform elongation of ≥6.0%.

9. A manufacturing method for the ultrahigh-strength steel plate with low carbon footprint according to any one of claims 1 to 8, wherein it comprises steps of:

full scrap steel is used for electric furnace smelting, LF, RH and continuous casting; wherein in the RH process, a vacuum treatment time is ≤10min, and soft blowing is performed for 15-25min after breaking vacuum;
hot rolling and coiling;
cold rolling;
continuous annealing: first holding at an annealing holding temperature of 760-820°C for 60-200s, then cooling to a rapid cooling start temperature of 650-690°C at a first cooling rate of 3-10°C/s, then cooling to a rapid cooling end temperature of 220-260°C at a second cooling rate of 40-80°C/s, subsequently holding for 200-400s for aging treatment, and finally cooling to 100°C or below at a third cooling rate of 2-10°C/s.

10. The manufacturing method according to claim 9, wherein in the electric furnace smelting process, the scrap steel adopted comprises three types of light scrap steel, medium scrap steel and heavy scrap steel, with a weight ratio of light scrap steel: medium scrap steel: heavy scrap steel = (3-3.5): (1.5-2): 1.

11. The manufacturing method according to claim 9, wherein in the LF process, a slag basicity is 1.8-2.5 to reduce a S content to within 30ppm.

12. The manufacturing method according to claim 9, wherein in the continuous casting process, a superheat degree is controlled at ≤30°C, a mold taper is controlled at 1.0-1.3%, and a continuous casting speed is controlled at 1.0-1.5m/min.

13. The manufacturing method according to claim 9, wherein in the hot rolling step, a slab heating temperature is controlled at 1200-1260°C, and a finish rolling temperature is controlled at 850-950°C.

14. The manufacturing method according to claim 9, wherein in the coiling step, a coiling temperature is controlled at 580-660°C.

15. The manufacturing method according to claim 9, wherein in the cold rolling step, a cold rolling reduction rate is controlled at 50-70%.

Figure 1

## INTERNATIONAL SEARCH REPORT

| International application No. |
| --- |
| **PCT/CN2024/120666** |

| | |
| --- | --- |
| **A.   CLASSIFICATION OF SUBJECT MATTER** | |

C22C38/14(2006.01)i;  C22C38/12(2006.01)i;  C22C38/06(2006.01)i;  C22C38/04(2006.01)i;  C22C38/02(2006.01)i;  C22C38/00(2006.01)i;  C21D9/46(2006.01)i;  C21D8/02(2006.01)i;  C21C5/52(2006.01)i;  C21C7/10(2006.01)i;  C21C7/06(2006.01)i

According to International Patent Classification (IPC) or to both national classification and IPC

**B.   FIELDS SEARCHED**

Minimum documentation searched (classification system followed by classification symbols)

IPC:  C22C C21D C21C

Documentation searched other than minimum documentation to the extent that such documents are included in the fields searched

Electronic data base consulted during the international search (name of data base and, where practicable, search terms used)

CNTXT, WPABS, ENTXT, CNKI: 钢板, 强度, 碳, c, 硅, si, 锰, mn, 钼, mo, 铌, nb, 钛, ti, 铝, al, 硼, b, 氮, n, 固溶, 析出, 电炉, 电弧炉, LF, RH, 精炼, 连铸, 热轧, 冷轧, 退火, steel sheet, strength, carbon, silicon, manganese, molybdenum, niobium, titanium, aluminum, boron, nitrogen, solid solution, precipitat+, electric furnace, refining, continuous casting, hot roll+, cold roll+, annealing

**C.   DOCUMENTS CONSIDERED TO BE RELEVANT**

| Category* | Citation of document, with indication, where appropriate, of the relevant passages | Relevant to claim No. |
| --- | --- | --- |
| X | KR 20130027793 A (HYUNDAI HYSCO CO., LTD.) 18 March 2013 (2013-03-18) description, paragraphs 0036-0080 and 0147-0160, and tables 1-2 | 1-8 |
| Y | KR 20130027793 A (HYUNDAI HYSCO CO., LTD.) 18 March 2013 (2013-03-18) description, paragraphs 0036-0080 and 0147-0160, and tables 1-2 | 9-15 |
| Y | CN 115058641 A (SHIJIAZHUANG IRON AND STEEL CO., LTD.) 16 September 2022 (2022-09-16) description, paragraphs 8-9 | 9-15 |
| A | CN 102732790 A (LAIWU STEEL GROUP, LTD.) 17 October 2012 (2012-10-17) entire document | 1-15 |
| A | CN 103060690 A (BAOSHAN IRON & STEEL CO., LTD.) 24 April 2013 (2013-04-24) entire document | 1-15 |

☑ Further documents are listed in the continuation of Box C.          ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **13 December 2024** | **28 December 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2024/120666**

**C. DOCUMENTS CONSIDERED TO BE RELEVANT**

| Category* | Citation of document, with indication, where appropriate, of the relevant passages | Relevant to claim No. |
|---|---|---|
| A | CN 108368590 A (POSCO) 03 August 2018 (2018-08-03)<br>entire document | 1-15 |

Form PCT/ISA/210 (second sheet) (July 2022)

## INTERNATIONAL SEARCH REPORT
### Information on patent family members

International application No.

**PCT/CN2024/120666**

| Patent document cited in search report | | | Publication date (day/month/year) | Patent family member(s) | | | Publication date (day/month/year) |
|---|---|---|---|---|---|---|---|
| KR | 20130027793 | A | 18 March 2013 | None | | | |
| CN | 115058641 | A | 16 September 2022 | CN | 115058641 | B | 23 May 2023 |
| CN | 102732790 | A | 17 October 2012 | CN | 102732790 | B | 12 March 2014 |
| CN | 103060690 | A | 24 April 2013 | WO | 2014114158 | A1 | 31 July 2014 |
| | | | | AU | 2013375523 | A1 | 06 August 2015 |
| | | | | AU | 2013375523 | B2 | 07 June 2018 |
| | | | | US | 2015361531 | A1 | 17 December 2015 |
| | | | | US | 11268176 | B2 | 08 March 2022 |
| | | | | EP | 2949773 | A1 | 02 December 2015 |
| | | | | EP | 2949773 | A4 | 31 August 2016 |
| | | | | EP | 2949773 | B1 | 01 July 2020 |
| | | | | KR | 20150109461 | A | 01 October 2015 |
| | | | | KR | 102229530 | B1 | 18 March 2021 |
| | | | | JP | 2016509129 | A | 24 March 2016 |
| | | | | JP | 6426621 | B2 | 21 November 2018 |
| | | | | RU | 2015136605 | A | 28 September 2017 |
| | | | | RU | 2711698 | C2 | 21 January 2020 |
| | | | | ZA | 201505249 | B | 27 July 2016 |
| CN | 108368590 | A | 03 August 2018 | US | 2019003002 | A1 | 03 January 2019 |
| | | | | US | 10975454 | B2 | 13 April 2021 |
| | | | | WO | 2017105025 | A1 | 22 June 2017 |
| | | | | WO | 2017105025 | A8 | 19 October 2017 |
| | | | | JP | 2019504195 | A | 14 February 2019 |
| | | | | JP | 6703606 | B2 | 03 June 2020 |
| | | | | KR | 101736619 | B1 | 17 May 2017 |
| | | | | CN | 108368590 | B | 08 May 2020 |

Form PCT/ISA/210 (patent family annex) (July 2022)

# EP 4 786 631 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 113215477 A
- CN 115058641 A
- CN 115433855 A

**Non-patent literature cited in the description**

- *GB/T 20124*